# EUROPÄISCHE PATENTSCHRIFT

(11) **EP 0 245 536 B1**
(45) Veröffentlichungstag und Bekanntmachung des Hinweises auf die Patenterteilung: **27.01.1993**
(21) Anmeldenummer: 86110391.9
(22) Anmeldetag: 28.07.1986
(51) Int. Cl.: G01N 21/35, D21C 3/22, G01N 33/34

(54) **Verfahren zur Kontrolle des Aufschlussgrades von lignocellulosehaltigen Materialien**
Method of controlling the degree of digestion of lignocellulose-containing materials
Procédé pour contrôle du rapport mixte dans les broyés des matériaux contenant des lignocellules

(30) Priorität: 13.05.1986 DE 3616051
(43) Veröffentlichungstag der Anmeldung: 19.11.1987
(73) Patentinhaber: BIO-RAD LABORATORIES, INC., Hercules California 94547 (US)
(72) Erfinder: Faix, Oskar, Dr., W-2056 Glinde (DE); Patt, Rudolf, Prof. Dr., W-2057 Reinbek (DE); Welkener, Ulrich, Dr., Widnes, Cheshire WA8 8UD (GB)
(74) Vertreter: Reitzner, Bruno, Dr.

(56) Entgegenhaltungen:
- DE-A- 3 504 486
- US-A- 4 540 468
- INTERNATIONAL SULFITE PULPING CONFERENCE - TAPPI PROCEEDINGS Oktober 1982, Seiten 285-292, Toronto, Canada; L. BYLUND et al.: "On-line cooking liquor analyzer. A means for effective control of sulfite digesters"
- SOVIET INVENTIONS ILLUSTRATED - WEEK 8548,24. Dezember 1985, Zusammenfassung Nr. 85-301194/48, FO9, Derwent Publications Ltd, London, GB;& SU-A-1155645
- APPLIED SPECTROSCOPY Band 39, Nr. 6. November/Dezember 1985, Seiten 1082-1084, Frederick, US; P.J. HENDRA et al.: "Devices to control the Amount of Water Vapor and Carbon Dioxide in the Sample Areas of Infrared Sepctrometers"
- ABSTRACT BULLETIN OF THE INSTITUTE OF PAPER CHEMISTRY Band 56, Nr. 6. Dezember 1985, Seite 702, Appleton, US; V.B. KARKLIN': "Sequence of Analysis of IR Spectras of Complex Polymeric Compounds (Lignin)."; & IK-i UF-Spectroskopiya Drev. Lignina (KARKLIN', V.B. et al., ed), 1977, Riga, Seiten 31-34
- ABSTRACT BULLETIN OF THE INSTITUTE OF PAPER CHEMISTRY Band 56, Nr. 6, Dezember 1985, Seite 702, Appleton, US; V.B. KARKLIN' et al.: "Differential IR Spectroscopy in the Study of Lignin."; & IK-i UF-Spektroskopiya Drev. Lignina (KARKLIN', V.B. et al., ed.), 1977, Riga, Seiten 27-30

## Beschreibung

Die Erfindung betrifft ein Verfahren zur Kontrolle des Aufschlußgrades von lignocellulosehaltigen Materialien durch spektroskopische Analyse der Aufschlußlösungen.

Da eine kontinuierliche direkte Messung der Ligninkonzentration in der Aufschlußlösung während der Kochung bis heute noch nicht möglich ist, wird bei bisher entwickelten Prozeßleitsystemen auf Sekundärdaten, die den Aufschluß beeinflussen, zurückgegriffen. Den Aufschlußgrad beeinflussende Faktoren sind die Kochtemperatur, die Kochdauer, der Kocherdruck sowie die Chemikalienkonzentration und -Zusammensetzung der Kochflüssigkeit. Auch bei sogenannten Feedback/Feed forward Systemen (Bylund, L.; Hägglund, S.; Thorsell, L.; Wallin, G.: On-line cooking liquor analyzer - A means for effective control of sulfite digesters. 1982 Internatinal Sulfite Pulping Conference, Toronto, Oct. 20 - 22, 1982, TAPPI Proceedings 285 - 292) läßt dies aber nur eine indirekte Bestimmung des Aufschlußgrades zu, und deshalb sind die daraus resultierenden Kappazahlabweichungen der erkochten Zellstoffe vom vorgegebenen Zielwert relativ hoch. Die Kappazahl ist ein Maß für den Restligningehalt des Zellstoffs. Sie wird bestimmt gemäß TAPPI Standard T 236 bzw. Zellcheming IV/37/80.

Aus diesem Grund wurden schon seit längerer Zeit Untersuchungen durchgeführt, die die Anwendbarkeit der Fluoreszenzspektroskopie (Bublitz, W.J.: Fluorescence of pulping liquors: A tool for digester control? TAPPI 64 (6), 73 - 76 (1981)) sowie der Licht- und UV-Photometrie (Helmke, D.: Untersuchungen über die Eignung der UV-Absorptionsmessung von Bisulfitablaugen zur Aufschlußkontrolle bei Zellstoffkochungen. Dissertation, Universität Hamburg, 1973, und Tikka, P.O.; Virkola, N.-E.: A new cooking liquor analyzer for monitoring organic and inorganic substances. 1984 Pulping Conference, San Francisco, Nov. 12 - 14, 1984, TAPPI Proceedings 291 - 296) zur Bestimmung der Ligninkonzentration in der Aufschlußlösung zum Gegenstand hatten. Es zeigte sich allerdings, daß entweder keine gute Korrelation zwischen dem Restligningehalt der erkochten Zellstoffe und der gemessenen Ligninkonzentration in der Aufschlußlösung am Ende der Kochung bestand oder aber der zeitliche Aufwand für die genaue Messung der Ligninkonzentration sehr groß war.

Die Literaturstelle "Abstract Bulletin of the Institute of Paper Chemistry" Band 56 Nr.6, Dez. 1985, Seite 702 befaßt sich mit der Hydroxylgruppen-Bestimmung von modifizierten Ligninen in der festen Phase (nach der sogenannten KBr-Pelletmethode) mittels eines Dispersiv-IR-Spektrometers, nicht aber mit der Analyse von Zellstoff-Kochablaugen in der flüssigen Phase mittels FTIR-Spektroskopie. Zellstoffablaugen sind nicht mit Lignin gleichzusetzen, da es sich um komplex zusammengesetzte Mehrkomponentengemische handelt, die eine Vielzahl von diversen Kohlenhydrat-Abbaupordukten, Ligninfragmenten, Phenolen, Extraktstoffen und anorganischen Chemikalien enthalten.

Der Erfindung liegt die Aufgabe zugrunde, eine bessere Kontrolle des Aufschlußgrades von lignocellulosehaltigen Materialien zum Zwecke einer Optimierung der Prozeßsteuerung zu erreichen.

Diese Aufgabe wird bei dem eingangs definierten Verfahren dadurch gelöst, daß man (1) das IR-spektroskopische Verhalten der Aufschlußlösung vor und während des Kochprozesses bestimmt und (2) die abgeleiteten IR-spektroskopischen Daten zur Bestimmung des Kochendpunktes und zur Prozeßsteuerung des Aufschlusses heranzieht, indem man diese Daten mit dem die Zusammensetzung bzw. die Konzentration der Kochchemikalien betreffenden Datensatz einerseits und den analytischen Daten der erkochten cellulosehaltigen Materialien andererseits korreliert und die eingestellten Korrelationsdaten zur Optimierung des Kochprozesses verwendet.

Das erfindungsgemäße Verfahren kann bei allen Aufschlußverfahren durchgeführt werden, d.h. man kann den Aufschluß bei pH-Werten im Bereich von 1 bis 14 durchführen. Insbesondere kann man den Aufschluß als Sulfitverfahren oder als Sulfatverfahren durchführen, obwohl auch andere Verfahren, wie das Sodaverfahren, angewendet werden können.

Bei dem erfindungsgemäßen Verfahren kann man das gesamte IR-Spektrum oder Teile davon im nahen und/oder mittleren IR-Bereich (12000 bis 400 cm⁻¹) zur Erstellung eines IR-Datensatzes heranziehen.

Das erfindungsgemäße Verfahren ermöglicht es, innerhalb kürzester Zeit sowohl die Änderung der Kochchemikalienzusammensetzung und -konzentration als auch den Konzentrationsanstieg der aus den lignocellulosehaltigen Materialien herausgelösten Substanzen im Verlauf der Kochung mit sehr großer Genauigkeit direkt in der Aufschlußlösung zu ermitteln. Die IR-Meßdaten werden hierbei vorzugsweise durch Fourier-Transform-Infrarot(FTIR)-Spektroskopie bestimmt. Die IR-Meßdaten können anhand der basislinienkorrigierten Bandenhöhen und/oder Integralflächen und/oder Spektrenverläufe ermittelt werden.

Die Probennahme und -messung erfolgt entweder manuell oder automatisch mit Hilfe einer Verbindungsleitung zwischen Kocher und IR-Spektrometer unter Einsatz einer Durchflußküvette. Im Gegensatz zu anderen Methoden ist es nicht nötig, die Aufschlußlösung zu verdünnen, zu fraktionieren oder sie sonstwie zu modifizieren. Es konnte auch kein Einfluß der Kochtemperatur, des Kocherdrucks oder der Chemikalienkonzentration der Kochflüssigkeit auf die Ligninkonzentrationsmessung mittels IR-Absorption festgestellt werden.

Die IR-Meßdaten der Aufschlußlösung im mittleren und/oder nahen IR-Bereich werden entweder mittels Transmissionsmessung oder mittels abgeschwächter Totalreflexion (ATR-Meßtechnik) gemessen, wobei ein für das jeweilige Aufschlußverfahren sowie für die jeweils eingesetzte Holzart spezifischer IR-Datensatz aus dem gesamten Spektrum oder Teilen davon gebildet wird, der aus verschiedenen Bandenhöhen und/oder Bandenintegralen und/oder Spektrenverläufen besteht. Die IR-Meßdaten können insbesondere in einer Zirkular-ATR-Küvette bestimmt werden, und zwar diskontinuierlich oder kontinuierlich in einer Durchflußküvette.

Dieser IR-Datensatz wird mit nach anderen Analyseverfahren erhaltenen Datensätzen über die Zusammensetzung bzw. die Konzentration der Kochchemikalien sowie mit den analytischen Daten der erkochten cellulosehaltigen Materialien, z.B. dem Restligningehalt verknüpft, so daß nach einer ausreichenden Anzahl von Kochungen die Korrelationen zwischen den Datensätzen ermittelt werden können. Durch ständige Kontrolluntersuchungen der erkochten cellulosehaltigen Materialien sowie der Aufschlußlösungen und Eingabe der erhaltenen Werte in die Korrelationsgleichungen wird die statistische Relevanz laufend verbessert.

Die die Kochchemikalien betreffenden Daten können z.B. titrimetrisch bestimmt werden, während die den Restligningehalt betreffenden Daten durch Bestimmung der Kappazahl ermittelt werden können.

Ein FTIR-Spektrometer mit einer an die mathematisch/ statistischen Auswertungsmethoden angepaßten Software ist in der Lage, verläßliche Daten zur Kochendpunktbestimmung zu liefern. Die ermittelten IR-Kenndaten können hierbei zusammen mit den anderen Kenndaten durch manuelle Eingabe oder on-line dem Datenspeicher von üblichen Prozeßleitsystemen zugeführt werden, wo sie zur Optimierung der Kochung herangezogen werden, um z.B. dem Kocherwärter Informationen zu liefern, wann mit dem Abgasen zu beginnen ist.

Die Erfindung ist durch die nachstehenden Beispiele in nicht einschränkender Weise erläutert.

### Beispiel 1

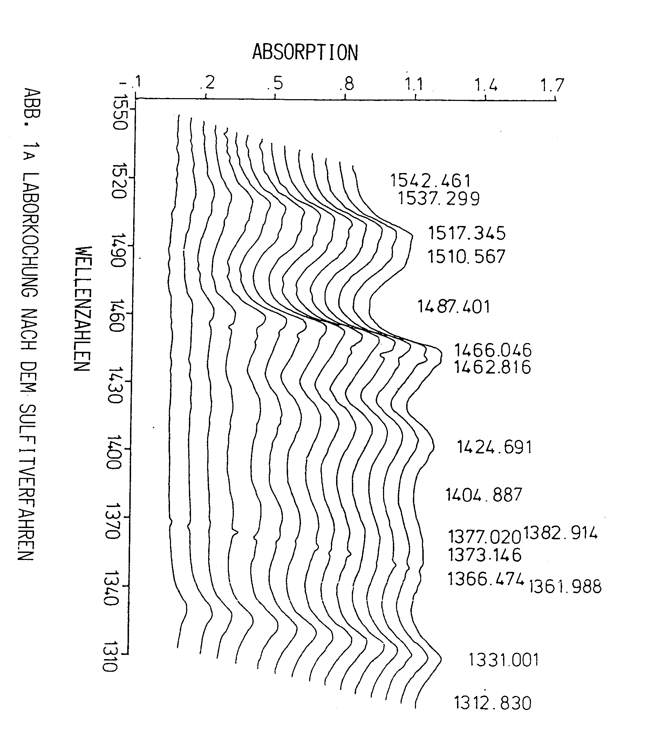

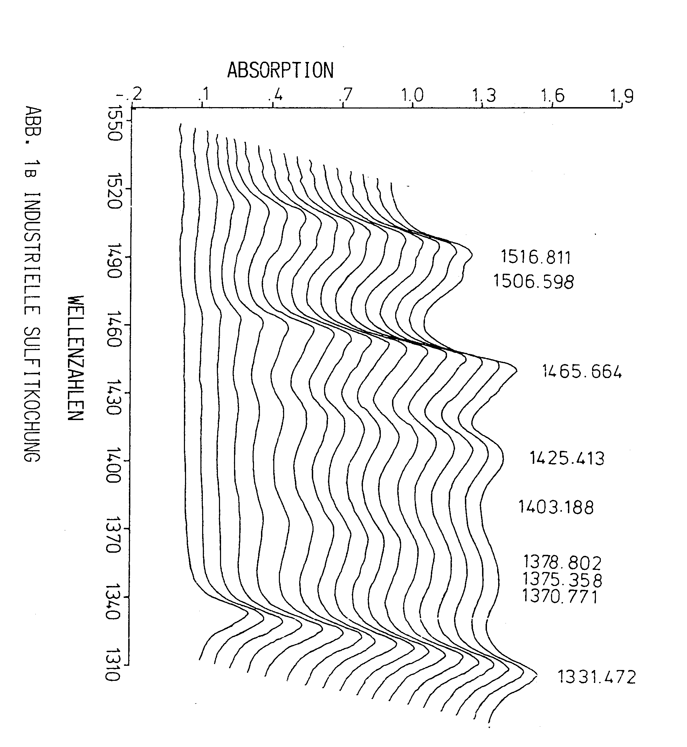

Einem Kocher, der nach dem Sulfitverfahren arbeitet, werden im Verlauf des Aufschlusses entweder chargenweise per Hand oder kontinuierlich mittels direkter Verbindungsleitung zwischen Kocher und Durchflußküvette Proben entnommen und diese sofort direkt im FTIR-Spektrometer gemessen und die IR-spektroskopischen Kenndaten aufgenommen. Das Fortschreiten einer Magnesiumbisulfitkochung von Buchenhackschnitzeln bei
a) einer Laborkochung und
b) einer Industriekochung
wird anhand des Anstiegs der Ligninkonzentration in der Aufschlußlösung in Abhängigkeit von der Kochdauer dargestellt. In den Abbildungen 1a und 1b ist die Zunahme der Absorption zweier Banden mit den Maxima bei ca. 1515 cm⁻¹ und 1465 cm⁻¹ ersichtlich.

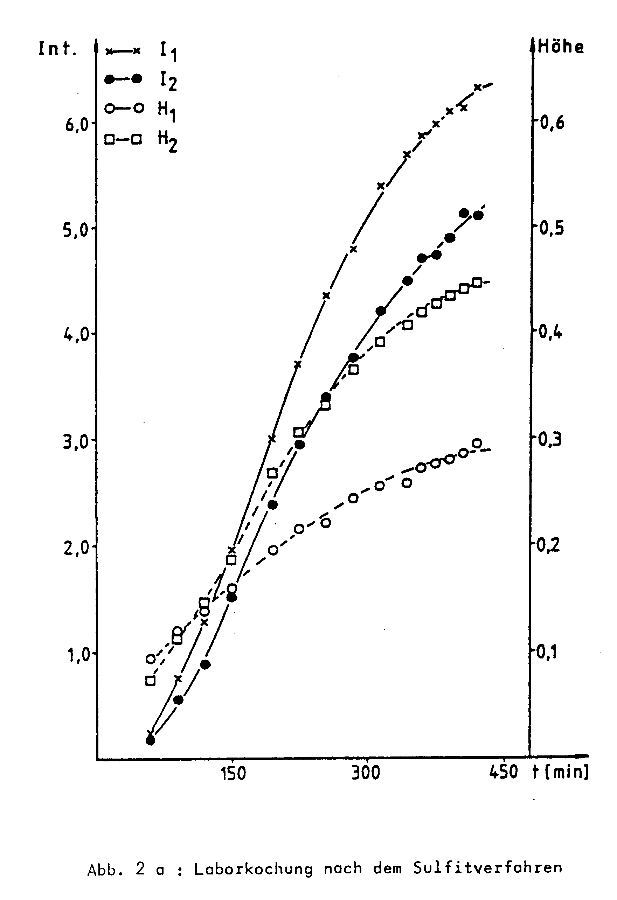

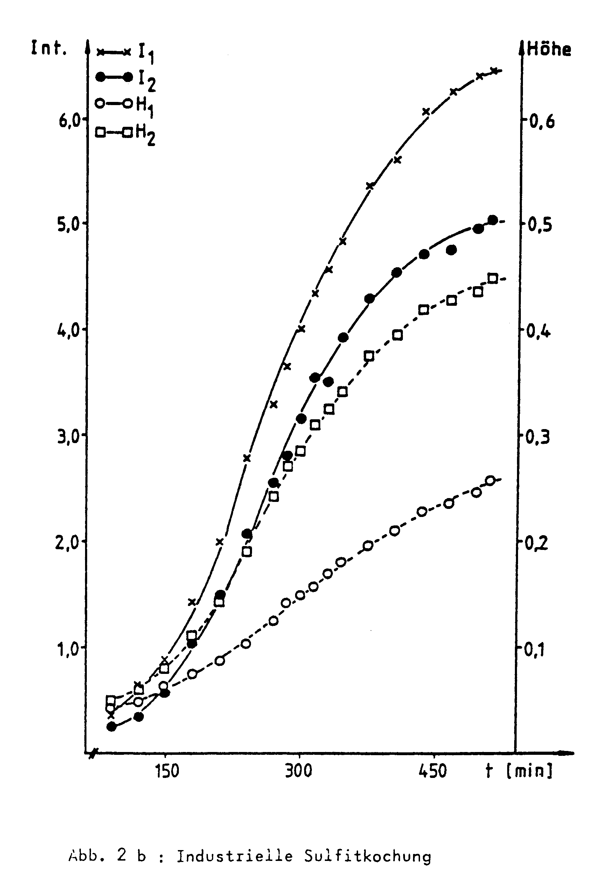

In den Abbildungen 2a und 2b ist der Anstieg der Integralflächen (I₁, I₂) und der Bandenhöhen (H₁, H₂) derselben Banden gegen die Kochdauer aufgetragen. Bei der Auswertung wird in beiden Fällen eine Basislinienkorrektur vorgenommen, wobei die Minima bei etwa 1540, 1485 und 1445 cm⁻¹ berücksichtigt werden.

Aufschlußbedingungen für
a) die Laborkochung:
   Kochsäurekonzentration: 6,65 % Gesamt-SO₂, 3,38 % freies SO₂, 2,13 % MgO
   Holzmenge: 800 g absolut trocken (atro)
   Kochertyp: Mini-mill Digester M/K Systems Inc.
   Flottenverhältnis: 3,5:1
   Aufheizdauer: 65 min
   Kochdauer bei Maximaltemperatur (Tₘₐₓ): 360 min
   Tₘₐₓ: 140° C
   Kocherdruck (p) bei Tₘₐₓ: 6,3 bar
   Kappazahl des erkochten Zellstofs: 22,3
b) die Industriekochung
   Kochsäurekonzentration: 5,50 % Gesamt-SO₂, 1,08 % freies SO₂, 1,38 % MgO
   Holzmenge: 64 t (atro)
   Kocher: 225 m³ Edelstahlkocher
   Flottenverhältnis: 2,5:1
   Aufheizdauer: 195 min
   Kochzeit bei Tₘₐₓ: 265 min
   T_{max:} 139° C
   p bei Tₘₐₓ: 5,5 bar
   Kappazahl des erkochten Zellstoffs: 17,2

### Beispiel 2

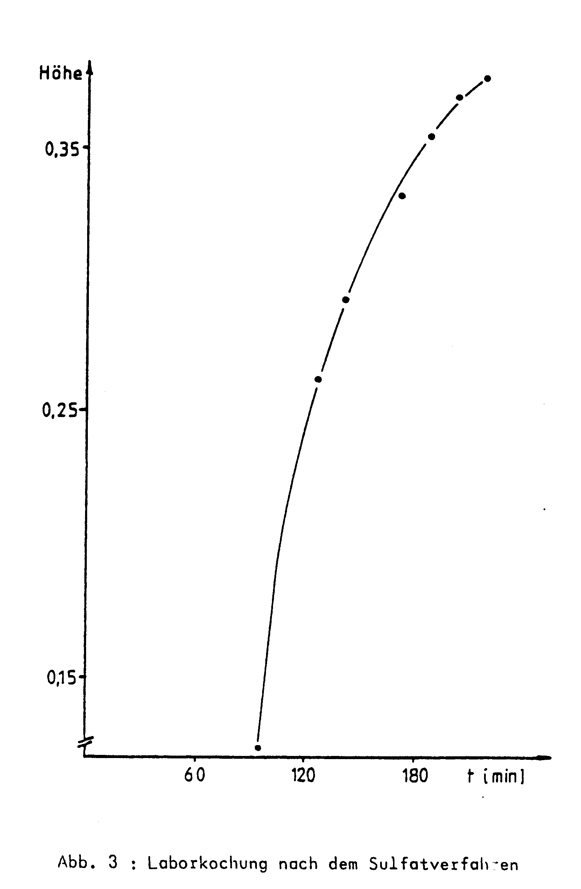

Der Kochverlauf einer Laborkochung von Fichtenhackschnitzeln nach dem Sulfatverfahren wird anhand des Konzentrationsanstiegs an gelösten Lignocellulosesubstanzen in Abhängigkeit von der Kochdauer am Beispiel des Bandenhöhenanstiegs bei ca. 1494 cm⁻¹ über die Kochzeit in Abbildung 3 dargestellt.
Aufschlußbedingungen:
Chemikalieneinsatz: 19 % NaOH/atro Holz, 8 % Na₂Co₃/atro Holz, 10 % Na₂S/atro Holz
Holzmenge: 800 g atro
Kochertyp: Mini-mill Digester M/K Systems Inc.
Flottenverhältnis: 4:1
Aufheizdauer: 95 min
Kochdauer bei Tₘₐₓ: 120 min
Tₘₐₓ : 170° C
p bei Tₘₐₓ: 7,7 bar
Kappazahl des erkochten Zellstoffs: 23,5

### Beispiel 3

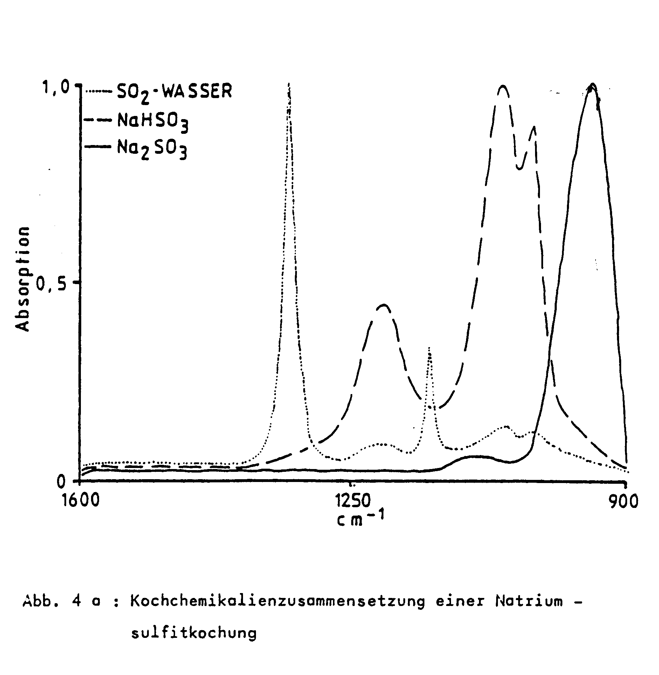

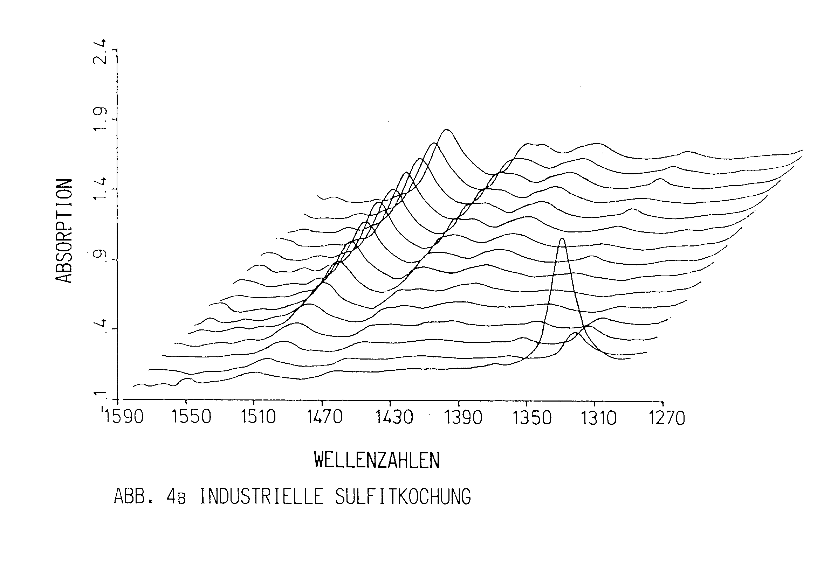

In Abbildung 4a sind die IR-Spektren der kochungsrelevanten Chemikalien einer sauren Natriumsulfitkochung dargestellt. Die Chemikalienzusammensetzung und -konzentration der Aufschlußlösung wird mit Hilfe einer Mehrkomponentenanalyse im FTIR-Spektrometer, z.B. an dem Verhältnis der für jede Kochchemikalie charakteristischen Bande oder Banden zueinander, ermittelt. Für Natriumsulfit liegt eine charakteristische Bande bei ca. 960 cm⁻¹, für Natriumhydrogensulfit bei ca. 1215 cm⁻¹ und für SO₂-Wasser ("freies SO₂") bei ca. 1330 cm⁻¹. Die Änderung der Chemikalienzusammensetzung im Verlauf eines Aufschlusses von Fichtenhackschnitzeln nach dem Sulfitverfahren ist in Abbildung 4b anhand der Abnahme der Absorption der Bande bei ca. 1330 cm⁻¹ für freies SO₂ dargestellt.
Aufschlußbedingungen:
Kochsäurekonzentration: 7,82 % Gesamt-SO₂, 5,10 % freies SO₂, 0,86 % MgO
Holzmenge: 58,2 t atro
Kocher: 320 m³ ausgemauerter Stahlkocher
Flottenverhältnis: 3,4:1
Aufheizdauer: 180 min
Kochdauer bei Tₘₐₓ: 270 min
Tₘₐₓ: 138° C
p bei Tₘₐₓ: 6,6 bar
Kappazahl des erkochten Zellstoffs: 7,2

### Beispiel 4

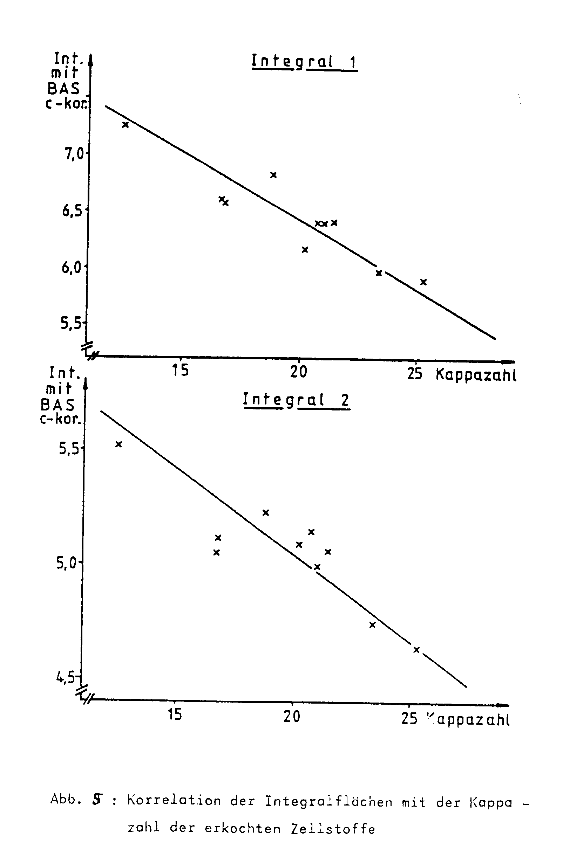

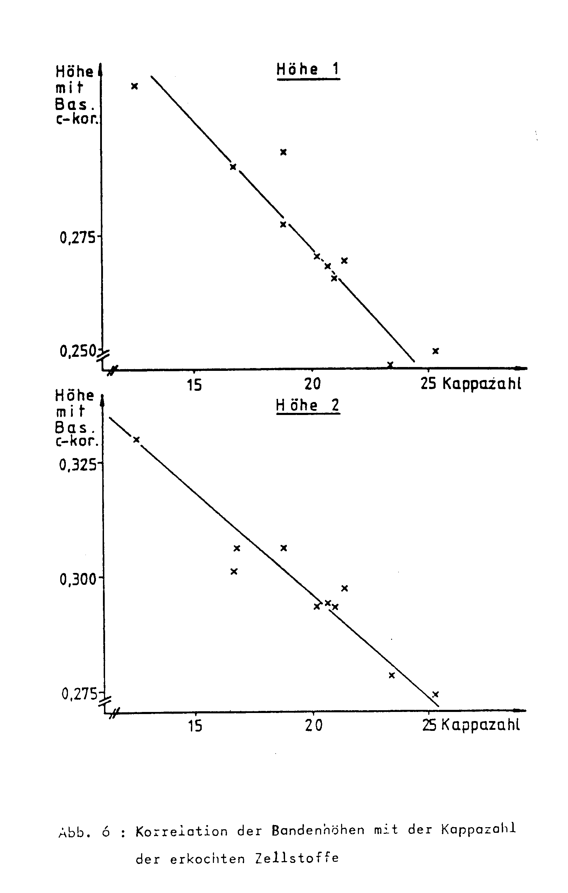

Es wurden 10 Magnesiumbisulfitkochungen von Buchenhackschnitzeln aus der Industrie entsprechend dem Verfahren von Beispiel 1 untersucht und anschließend die basislinien- und flottenverhältniskorrigierten Integralwerte und Bandenhöhen mit der Kappazahl der erkochten Zellstoffe mittels Regressionsanalyse korreliert. Die Ergebnisse sind in den Abbildungen 5 und 6 dargestellt.
Es ergaben sich Korrelationskoeffizienten, die zwischen 0,79 und 0,95 lagen.
Bereich der Aufscflußbedingungen:
Kochsäurekonzentration: 5,5 - 5,8 % Gesamt-SO₂
0,8 - 1,1 % freies SO₂
1,35 - 1,45 % MgO
Holzmenge: 64 - 75 t atro
Kocher: 225 m³ Edelstahlkocher
Flottenverhältnis: 2,1 : 1 - 2,8 : 1
Tₘₐₓ: 137° - 143° C
Kochdauer bei Tₘₐₓ: 240 - 330 min
p bei Tₘₐₓ: 5,0 - 5,8 bar
Kappazahl der erkochten Zellstoffe: 12 - 26

### Beispiel 5

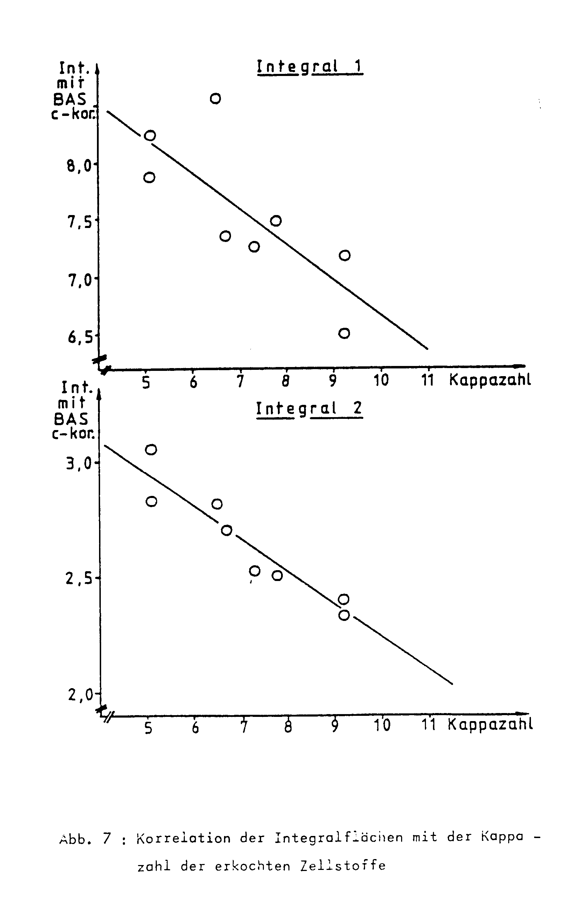

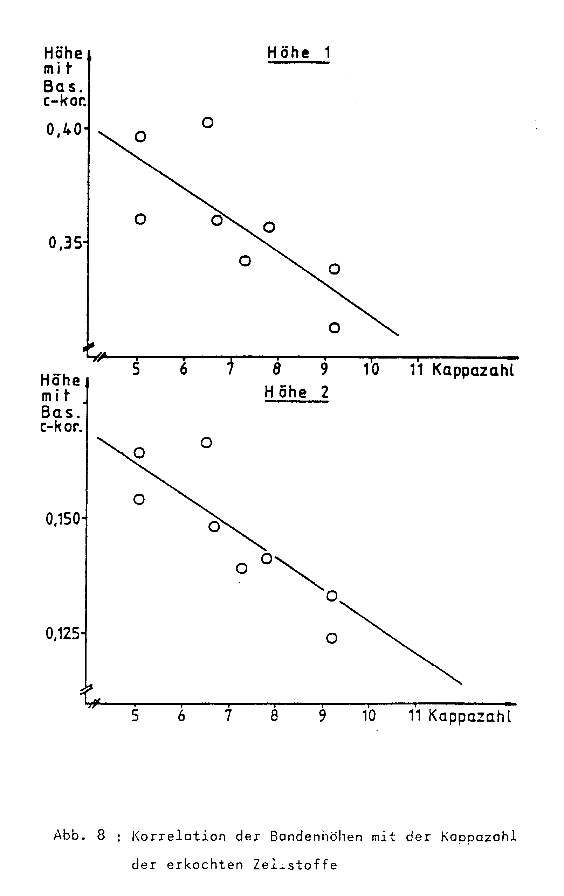

Es wurde für 8 Magnesiumbisulfitkochungen von Fichtenhackschnitzeln, ebenfalls aus der Industrie, die zur Erzeugung tiefviskoser Chemiezellstoffe dienten, entsprechend Beispiel 1 und 4 verfahren. Die Korrelationen sind in den Abbildungen 7 und 8 dargestellt.
Die ermittelten Korrelationskoeffizienten lagen in diesem Fall zwischen 0,75 und 0,94.
Bereich der Aufschlußbedingungen:
Kochsäurekonzentration: 7,5 - 8,5 % Gesamt-SO₂
5,0 - 6,6 % freies SO₂
0,75 - 0,95 % MgO
Holzmenge: 55 - 66 t atro
Kocher: 320 m³ ausgemauerter Stahlkocher
Flottenverhältnis: 3,3 : 1 - 4,1 : 1
Tₘₐₓ: 136° - 142° C
Kochdauer bei Tₘₐₓ: 160 - 270 min
p bei Tₘₐₓ: 6,5 - 7,0 bar
Kappazahl der erkochten Zellstoffe: 5 - 10

## Patentansprüche

1. Verfahren zur Kontrolle des Aufschlußgrades von lignocellulosehaltigen Materialien durch spektroskopische Analyse der Aufschlußlösungen, dadurch gekennzeichnet, daß man (1) das IR-spektroskopische Verhalten der Aufschlußlösung vor und während des Kochprozesses bestimmt und (2) die abgeleiteten IR-spektroskopischen Daten zur Bestimmung des Kochendpunktes und zur Prozeßsteuerung des Aufschlusses heranzieht, indem man diese Daten mit dem die Zusammensetzung bzw. die Konzentration der Kochchemikalien betreffenden Datensatz einerseits und den analytischen Daten der erkochten cellulosehaltigen Materialien andererseits korreliert und die eingestellten Korrelationsdaten zur Optimierung des Kochprozesses verwendet.

2. Verfahren nach Anspruch 1, dadurch gekennzeichnet, daß man den Aufschluß bei pH-Werten im Bereich von 1 bis 14 durchführt.

3. Verfahrer nach Anspruch 1 oder 2, dadurch gekennzeichnet, daß man den Aufschluß als Sulfitverfahren durchführt.

4. Verfahren nach Anspruch 1 oder 2, dadurch gekennzeichnet, daß mar den Aufschluß als Sulfatverfahren durchführt.

5. Verfahren nach einem der Ansprüche 1 bis 4, dadurch gekennzeichnet, daß man das gesamte IR-Spektrum oder Teile davon im nahen und/oder mittleren IR-Bereich (12000 - 400 cm⁻¹) zur Erstellung eines IR-Datensatzes heranzieht.

6. Verfahren nach einem der Ansprüche 1 bis 5, dadurch gekennzeichnet, daß man die IR-Meßdaten anhand der basislinienkorrigierten Bandenhöhen und/oder Integralflächen und/oder Spektrenverläufe ermittelt.

7. Verfahren nach einem der Ansprüche 1 bis 6, dadurch gekennzeichnet, daß man die IR-Meßdaten durch Fourier-Transform-Infrarot-(FTIR)-Spektroskopie bestimmt.

8. Verfahren nach einem der Ansprüche 1 bis 7, dadurch gekennzeichnet, daß man die IR-Meßdaten entweder mittels Transmissionsmessung oder mittels abgeschwächter Totalreflexion (ATR-Meßtechnik), insbesondere in einer Zirkular-ATR-Küvette, diskontinuierlich oder kontinuierlich in einer Durchflußküvette bestimmt.

9. Verfahren nach einem der Ansprüche 1 bis 8, dadurch gekennzeichnet, daß man die Korrelation zwischen dem IR-Datensatz und dem die Zusammensetzung bzw. die Konzentration der Kochchemikalien betreffenden Datensatz einerseits und den analytischen Daten der erkochten cellulosehaltigen Materialien andererseits, entweder mittels Regressionsanalyse und/oder anderer mathematisch-statistischer Methoden, z.B. der Kurvenanpassung nach dem kleinsten Fehlerquadrat vornimmt.

10. Verfahren nach Anspruch 9, dadurch gekennzeichnet, daß man die die Kochchemikalien betreffenden Daten titrimetrisch und die den Restligningehalt betreffenden Daten durch Bestimmung der Kappazahl ermittelt.

11. Verfahren nach einem der Ansprüche 1 bis 10, dadurch gekennzeichnet, daß man die ermittelten IR-Kenndaten zusammen mit den anderen Kenndaten durch manuelle Eingabe oder on-line dem Datenspeicher von üblichen Prozeß-Leitsystemen zuführt.

## Claims

1. A process for controlling the degree of digestion of ligno-cellulose-containing materials by spectroscopical analysis of the digestion solutions, characterized in that (1) the IR-spectroscopical behaviour of the digestion solution before and during the cooking process is determined, and (2) the derived IR-spectroscopical data are used for determining the cooking end point and for controlling the digestion process, by correlating these data with the data set relating to the composition or the concentration of the cooking chemicals on the one side, and the analytical data of cooked cellulose-containing materials on the other side, and using the resulting correlation data for optimising the cooking process.

2. The process according to claim 1 , characterized in that the digestion is performed at pH-values within the range of from 1 to 14.

3. The process according to claims 1 or 2, characterized in that the digestion is carried out as a sulfite process.

4. The process according to claims 1 or 2, characterized in that the digestion is carried out as sulfate process.

5. The process according to anyone of claims 1 to 4, characterized in that the entire IR-spectrum or part thereof in the near and/or medium IR-range (12000-400 cm⁻¹) is used for producing an IR-data set.

6. The process according to anyone of claims 1 to 5, characterized in that the IR-measuring data are determined in terms of the base-line-corrected band heights and/or the integral surfaces and/or the course of the spectra.

7. The process according to anyone of claims 1 to 6, characterized in that the IR-measuring data are determined by Fourier transform infrared (FTIR) spectroscopy.

8. The process according to anyone of claims 1 to 7, characterized in that the IR-measuring data are determined either by means of transmission mesurement or by means of attenuated total reflection (ATR-mesuring techniques), especially discontinuously within a circular ATR cuvette, or continuously in a flow-through cuvette.

9. The process according to anyone of claims 1 to 8, characterized in that the correlation between the IR-data set and the data set relating to the composition or the concentration of the cooking chemicals on the one side, and the analytical data of the cooked cellulose-containing materials, on the other side, is carried out either by regression analysis and/or by other mathematical-statistical methods, e.g. by curve fitting according to the least error square.

10. The process according to claim 1, characterized in that the data relating to the cooking chemicals are determined titrimetically, and the data relating to the residual lignin content are determined by measuring the kappa number.

11. The process according to anyone of claims 1 to 10, characterized in that the IR-data found are fed to the data memory of usual process control systems together with the other parameters by manual feeding or on-line.

## Revendications

1. Procédé pour contrôller le degré de décomposition des matériaux ligno-cellulosiques par analyse spectroscopique des solutions des décompositions, caractérisé par le fait que l'on (1) détermine le comportement IR-spectroscopique de la solution des décomposition avant et pendant le procès bouillant, et (2) que l'on utilise les dates IR-spectroscopiques dérivées pour la détermination du point final du procès bouillant pour contrôller le procès de la décomposition, en correlant ces dates avec l'ensemble des dates concernant la composition ou la concentration des produits chimiques, d'une part pour la mise en marche du procès bouillant et d'autre part, les dates analytique des matériaux cellulosiques cuites, et en utilisant les dates de correlation atteints pour optimer le procès bouillant.

2. Procédé selon la revendication 1 , caractérisé par le fait que l'on effectue la décomposition aux valeur de pH entre 1 et 14.

3. Procédé selon les revendications 1 ou 2, caractérisé par le fait que l'on effectue la décomposition comme procédé au sulfite.

4. Procédé selon les revendications 1 ou 2, caractérisé par le fait que l'on effectue la décomposition comme procédé au sulfate.

5. Procédé selon l'une quelconque des revendications 1 à 4, caractérisé par le fait que l'on utilise le spectre IR entier ou les parties qui concernent la domaine IR proche et/ou moyenne (12000 - 400 cm⁻¹) pour obtenir un ensemble des dates IR.

6. Procédé selon l'une quelconque des revendications 1 à 5, caractérisé par le fait que l'on détermine les dates de mesure IR par les altitudes des bandes corrigées à la ligne de base, et/ou par les surfaces intégraux et/ou par présentation des spectres.

7. Procédé selon l'une quelconque des revendications 1 à 6, caractérisé par le fait que l'on détermine les dates de mesure IR par spectroscopie infrarouge transformation Fourier (FTIR).

8. Procédé selon l'une quelconque des revendications 1 à 7, caractérisé par le fait que l'on détermine les dates de mesure IR soit par mesure de la transmission, soit en déterminant la reflexion totale affaiblie (technique de mesure ATR), en particulier dans une cuvette circulaire ATR par voie discontinue ou continue dans une cuvette de passage.

9. Procédé selon l'une quelconque des revendications 1 à 8, caractérisé par le fait que l'on effectue la correlation entre l'ensemble des dates IR d'une part avec l'ensemble des dates relatives a la composition ou la concentration des produits chimiques de décoomposition d'une part et d'autre part les dates analytiques des matériaux cellulosiques cuites, soit par analyse de regression et/ou soit par d'autres méthodes mathématiques-statistiques, par example par adaption de la courbe selon le carré de défaut minimal.

10. Procédé selon la revendication 9, caractérisé par le fait que l'on détermine les dates concernant les produits chimiques pour la mise en marche du procès bouillant par voie titrimetrique et les dates concernant la concentration du lignin residuel par détermination de la valeur kappa.

11. Procédé selon l'une quelconque des revendications 1 à 10, caractérisé par le fait que l'on mène les dates caractéristiques IR déterminées avec les autres dates caractéristiques manuellement ou "on line" à la memoire d'un ordinateur des systèmes du contrôle du procès conventionelles.
